# EUROPÄISCHE PATENTANMELDUNG

(11) **EP 2 957 167 A1**
(43) Veröffentlichungstag der Anmeldung: **23.12.2015**
(21) Anmeldenummer: 14172723.0
(22) Anmeldetag: 17.06.2014
(51) Int. Cl.: A01G 9/12

(54) **Vorrichtung zur Stabilisierung von Pflanzen mit insbesondere schweren Fruchtständen**

(71) Anmelder: Lang, Siegdried, 08340 Schwarzenberg (DE); Lang, Yvonne, 08340 Schwarzenberg (DE); Lang, Oliver, 08340 Schwarzenberg (DE)
(72) Erfinder: Lang, Siegdried, 08340 Schwarzenberg (DE); Lang, Yvonne, 08340 Schwarzenberg (DE); Lang, Oliver, 08340 Schwarzenberg (DE)
(74) Vertreter: Kruspig, Volkmar

(57) **Zusammenfassung**

Die Erfindung betrifft eine Vorrichtung zur Stabilisierung von Pflanzen mit insbesondere schweren Fruchtständen wie Tomaten, Gurken, Paprika oder dergleichen, umfassend eine eigenstabile Stange oder Stab sowie hieran befestigte, untereinander beabstandete Halteringe. Bevorzugt bildet der Stab eine zusammensteckbare Anordnung. Erfindungsgemäß weist zum Aufnehmen der Stange oder des Stabes (16) in einem an sich bekannten Pflanzgefäß (10) mit Zwischenboden (11) der dortige Zwischenboden (11) eine Durchgangsöffnung (14) zum Hindurchführen eines Endes (15, 17) des Stabes (16) auf, wobei das Stabende (17) in einer Ausnehmung (18) im oder am Boden (13) des Pflanzgefäßes (10) formschlüssig gehalten ist.

## Beschreibung

Die Erfindung betrifft eine Vorrichtung zur Stabilisierung von Pflanzen mit insbesondere schweren Fruchtständen wie Tomaten, Gurken, Paprika oder dergleichen, umfassend eine eigenstabile Stange oder Stab sowie hieran befestigte, untereinander beabstandete Halteringe gemäß Anspruch 1.

Aus der DE 1 690 132 U1 ist ein Pflanzenstützhalter, insbesondere für Tomatenpflanzen vorbekannt. Dieser Pflanzenstützhalter besteht aus verzinktem Draht, der in passenden Abständen zu offenen Schlingen ausgebildet ist, in welche die Blatt- oder Fruchtachsen hineingelegt werden. Durch die offenen Schlingen entfällt die bis dato erforderliche Maßnahme des Anbindens der Pflanzen an entsprechende Haltestäbe. Die Frucht- oder Blattachsen können in die offenen Schlingen hinein eingelegt werden, wodurch letztlich der Tomatenstamm selbst gerade oder in Schlingenform um den Stab wächst.

Nachteilig bei der Ausbildung eines Pflanzenstützhalters aus verzinktem Draht mit schlingenförmigen Halteelementen ist die aufwendige Herstellung sowie das seitliche Einführen der Frucht- oder Blattachse in die seitlich offenen Schlingen. Darüber hinaus weisen die Schlingen bezogen auf die Stablängsachse Richtungswechsel auf, was das Einlegen der Fruchtachsen erschwert.

Aus dem deutschen Gebrauchsmuster DE 1 788 687 U1 ist darüber hinaus ein Halter für rankende oder strauchartige Gewächse, insbesondere Rosen, vorbekannt, bei welchem ein schweres, aus Gusseisen bestehendes Fußteil vorhanden ist. Vom Fußteil aus erstrecken sich ein oder mehrere nach oben gerichtete Stangen, vorzugsweise aus Stahlrohr.

Diese Stangen dienen der Aufnahme im Wesentlichen waagerecht angeordneter Halteringe. Die Halteringe werden mit Stellmitteln an der Stange befestigt. In einer Ausführungsform der vorbekannten Lösung können die Halteringe eine unterschiedliche Größe besitzen.

Ein Halter mit einem Gusseisen-Fußteil ist zum einen kostenintensiv in der Herstellung und schwer zu transportieren. Ebenso kostenintensiv ist die Ausbildung erforderlicher Stellringe zum Fixieren der Halteringe an der Stange. Insbesondere nach einem mehrjährigen Gebrauch lassen sich Korrosionserscheinungen an den Stellringen und dem dort vorhandenen Klemmgewinde nicht vermeiden.

Die US 6,209,258 B1 zeigt eine Pflanzhilfe, bestehend aus einem Pflanzstab und einer Bodenplatte, wobei der Pflanzstab höhenverstellbare Fixiervorrichtungen aufweist. Die Fixiervorrichtungen sind mit einer Öffnung versehen, um den Pflanzstamm leicht einführen zu können.

Aus der US 4,519,162 B ist eine Pflanzhilfe vorbekannt, welche aus einem Pflanzstab besteht, der mehrere Ringe aufweist, die in der Höhe verstellbar sind. Durch die Ringe wird die jeweilige Pflanze geführt und stabilisiert.

Die gattungsbildende Vorrichtung ist aus der DE 10 2012 015 266 A1 bekannt.

Aus dem Vorgenannten ist es daher Aufgabe der Erfindung, eine weiterentwickelte Vorrichtung zur Stabilisierung von Pflanzen mit insbesondere schweren Fruchtständen anzugeben, die zum einen kostengünstig hergestellt werden kann, leicht handhabbar ist, einen mehrjährigen Gebrauch ermöglicht und ohne weitere Hilfsmittel sicher in einem Pflanzgefäß fixierbar ist.

Die Lösung der Aufgabe der Erfindung erfolgt durch die Merkmalskombination nach Anspruch 1, wobei die Unteransprüche mindestens zweckmäßige Ausgestaltungen und Weiterbildungen darstellen.

Es wird demnach von einer Vorrichtung zur Stabilisierung von Pflanzen mit insbesondere schweren Fruchtständen wie Tomaten, Gurken, Paprika oder dergleichen ausgegangen, selbige umfassend eine eigenstabile Stange oder Stab sowie hieran befestigte, untereinander beabstandete Halteringe.

Bei einer ersten Ausführungsform liegt der Durchmesser der Halteringe im Bereich zwischen im Wesentlichen 40 mm bis 100 mm, bevorzugt bei ca. 45 mm bis 55 mm. Weiterhin beträgt der Abstand der Ringe an der Stange oder dem Stab zwischen 200 mm und 300 mm, bevorzugt zwischen 220 mm und 250 mm. Die Halteringe sind stoffschlüssig, insbesondere durch Verschweißen an der Stange oder dem Stab fixiert.

Alle Halteringe weisen zueinander eine konzentrische Anordnung auf, so dass die Pflanze nicht gezwungen ist, beim Wuchs einen Richtungswechsel zu vollziehen.

In einer Ausgestaltung weist der Stab oder die Stange eine Profilierung oder eine Oberflächenstrukturierung auf, so dass sich ein verbesserter Halt der Pflanze ergibt und darüber hinaus beim Einstecken des Stabes in den Boden eine erhöhe Standsicherheit gewährleistet wird.

In einer Ausführungsform sind die Ringe geschlossen. Alternativ besteht aber auch die Möglichkeit, einen einfachen Schlitz im Ring einzubringen bzw. den Ring geschlitzt auszuführen. Aufgrund der Elastizität des metallischen Halteringmaterials kann im Schlitzbereich der Ring geöffnet werden, um den Pflanzstamm einzuführen, wenn dies aufgrund möglicherweise zu langen Zuwartens durch Einbringen in den Ring von unten nach oben nicht mehr möglich ist.

Insbesondere aus Gründen der leichten Transportierbarkeit bzw. der Reduzierung von Versandkosten können der Stab oder die Stange geteilt oder teleskopartig ausgebildet werden.

Bei einer Ausführungsform Vorrichtung insbesondere für eine Nutzung in Pflanzgefäßen für z.B. Terrassen oder Balkone ist am unteren Ende des Stabes oder der Stange eine abnehmbare Bodenplatte ausgebildet.

Diese Bodenplatte besteht im einfachsten Fall aus einer Kunststoff- oder Metallplatte z.B. mit den Abmessungen von ca. 120 mm x 120 mm. Dabei kommt es nicht primär auf die Masse dieser metallischen Bodenplatte, sondern auf deren auf das jeweilige Pflanzgefäß angepasste Fläche an. Durch das Einbringen von Pflanzerde, respektive das Verfüllen des Pflanzgefäßes nach Einbringen der Vorrichtung mit Bodenplatte stellt sich ein gewünschter sicherer Halt des Pflanzstabs im Gefäß ein, ohne dass weitere Maßnahmen erforderlich sind.

Der Abstand des ersten, unteren Ringes beträgt bei der Ausführungsform der Pflanzstange mit Rammspitze beispielsweise 400 mm. Bei der Ausführungsform mit Bodenplatte beträgt der Abstand zwischen der Bodenplatte und dem ersten, unteren Ring ca. 500 mm, selbstverständlich anpassbar nach der Ausführungsform des zu nutzenden Pflanzgefäßes.

Der zum Einsatz kommende Stab bzw. die entsprechende Stange sowie die Halteringe werden im Interesse der Langlebigkeit mit einer Korrosionsschutzschicht versehen. Hierfür eignet sich insbesondere eine Pulverbeschichtung oder eine Zinkschicht. Es hat sich gezeigt, dass die Pulverbeschichtung nicht vermeidbare Kanten an den Halteringen glättet, scharfe, womöglich den Pflanzstamm verletzende Abschnitte können hierdurch verhindert werden.

Der Stab oder die Stange ist bevorzugt aus einem Metallprofil oder einem Metallrohr bestehend, wobei, wie eingangs dargelegt, insbesondere ein Baustahlprofil bevorzugte Anwendung findet.

Die Anzahl der Halteringe beträgt in Abhängigkeit von der Stab- oder Stangenlänge zwischen drei und zehn, bevorzugt drei und sieben.

Bei einer zweiten Ausführungsform wird das oben geschilderte Konzept unter dem Aspekt der noch kostengünstigeren Produktion und der Materialeinsparung fortgebildet.

Diesbezüglich sind die Halteringe mit der Stange oder dem Stab oder einem Stangen- oder Stababschnitt einstückig ausgeführt.

So besteht beispielsweise die Möglichkeit, den Haltering mit einem Stababschnitt durch Kunststoff-Spritzpressen herzustellen. Der diesbezügliche Stangen- oder Stababschnitt weist einen in Längsachsenrichtung verlaufenden Hohlraum, der die Form einer Zylinderbohrung aufweisen kann, auf.

Dieser Hohlraum ist nun in der Lage, z.B. einen im Außendurchmesser angepassten Fortsatz eines weiteren Stangen- oder Stababschnitts mit Haltering aufzunehmen. Alternativ besteht die Möglichkeit, dass der diesbezüglich ausgestaltete Stangen- oder Stababschnitt ein Rohrende aufnimmt. Quasi durch Zwischenschalten derartiger Rohrelemente oder Rohrteile kann eine Folge von Stangen- oder Stababschnitten mit Halteringen je nach dem vorhandenen Bedarf, auch vor Ort zusammengefügt werden, wobei die Rohrelemente und die Stangen- oder Stababschnitte formschlüssig miteinander in Verbindung stehen.

Das Zusammenfügen der Stangen- oder Stababschnitte mit Halteringen zur Vorrichtung entweder unter dem vorerwähnten Zwischenschalten der Rohrelemente oder durch Verbinden untereinander ohne Rohrelemente kann so erfolgen, dass die oben erwähnten Abstände der Halteringe zwischen 200 mm und 300 mm eingehalten werden. Wenn der Abstand der Halteringe untereinander, z.B. unter Beachtung der jeweiligen zu stützenden Pflanzsorte, variieren soll, kann auf zwischengeschaltete Rohrelemente verzichtet werden. Insofern ist bei der hier geschilderten Ausführungsform das Einhalten der Halteringabstände fakultativ und nicht obligatorisch.

Bei einem Ausführungsbeispiel werden die Rohrelemente als Zwischenstücke aus Metall gefertigt. Alternativ ist hier aber auch der Einsatz von Kunststoffrohren denkbar.

Erfindungsgemäß besteht die Möglichkeit, die Vorrichtung zur Stabilisierung von Pflanzen in ein Pflanzgefäß einzusetzen, wobei diesbezüglich von einem an sich bekannten Pflanzgefäß mit Zwischenboden ausgegangen wird.

Der Zwischenboden des Pflanzgefäßes weist erfindungsgemäß eine Durchgangsöffnung zum Hindurchführen eines Endes des Pflanzstabes auf, wobei das eigentliche Stabende in einer Ausnehmung im oder am Boden des Pflanzgefäßes formschlüssig gehalten ist.

Durch den Abstand zwischen dem eigentlichen Boden des Pflanzgefäßes und dem Zwischenboden und die Durchgangsöffnung nebst Ausnehmung wird der Stab ausreichend gesichert und erhält die gewünschte vertikale Orientierung.

Das Fixieren des Pflanzstabes wird dabei durch die vorstehenden Mittel sichergestellt und durch in das Pflanzgefäß eingegebenes Erdreich zusätzlich gewährleistet. Es sei jedoch darauf hingewiesen, dass die gewünschte sichere vertikale Lage des Pflanzstabes bereits allein und ausreichend durch die Durchgangsöffnung im Zwischenboden nebst Ausnehmung im Boden des Pflanzgefäßes bewerkstelligt werden kann.

Es besteht also erfindungsgemäß die Möglichkeit, durch einfaches Nachrüsten einer Durchgangsöffnung im Zwischenboden eines Pflanzgefäßes und Vorsehen der Ausnehmung im Boden des Pflanzgefäßes einen Pflanzstab sicher zu halten.

Dabei liegt es in der Natur der Sache, dass die Durchgangsöffnung und die Ausnehmung konzentrisch zueinander, d.h. übereinander liegen, um die gewünschte vertikale Position des Pflanzstabes zu erreichen.

Bei einer bevorzugten außermittigen oder außerhalb des Schwerpunkts des Pflanzgefäßes befindlichen Lage von Durchgangsöffnung und Ausnehmung kann sich die Pflanze besonders gut entfalten.

Die Ausnehmung umfasst bevorzugt einen Hülsenabschnitt, dessen Innendurchmesser dem Außendurchmesser des Stabes entspricht, so dass der gewünschte Formschluss resultiert.

Der Zwischenboden selbst ist in das Pflanzgefäß einlegbar und wird dort formschlüssig gehalten. Die vorerwähnte Ausnehmung in Form eines Hülsenabschnitts kann beim Herstellungsprozess des Pflanzgefäßes durch z.B. Kunststoff-Spritzpressen realisiert werden.

Im Vergleich zu einer klassischen Bodenplatte eines Pflanzgefäßes ergibt sich bei der erfindungsgemäßen Lösung eine wesentlich bessere Fixierung des Stabes mit größerem seitlichen Halt, was bei Pflanzen mit schweren Fruchtständen von besonderem Vorteil ist.

Die Erfindung soll nachstehend anhand von Ausführungsbeispielen sowie unter Zuhilfenahme von Figuren näher erläutert werden.

Hierbei zeigen:
- Fig. 1: zwei prinzipielle Varianten bekannter Pflanzenhalterungen;
- Fig. 2a und 2b: einen Längsschnitt sowie eine Draufsicht auf einen Stangen- oder Stababschnitt, der einstückig mit einem Haltering ausgeführt ist;
- Fig. 3a und 3b: eine Längsschnittdarstellung sowie eine Draufsicht auf eine Variante des Stangen- oder Stababschnitts mit einstückig ausgebildetem Haltering und einem am oberen Ende vorgesehenen durchmesserseitigen Verjüngungsabschnitt sowie einem am unteren Ende vorhandenen Hohlraum, entweder zur Aufnahme eines entsprechenden Verjüngungsabschnitts oder eines zwischenschaltbaren Rohrelements;
- Fig. 4: eine Seitenansicht mit Teillängsschnitt einer Anordnung von zwei einstückigen Stangen- oder Stababschnitten mit Haltering unter Zwischenschalten eines Verbindungs- und Verlängerungsrohrs;
- Fig. 5: eine Anordnung ähnlich derjenigen nach Fig. 4, jedoch mit einer Vielzahl von Stangen- oder Stababschnitten mit Haltering und zwischengeschalteten Rohrelementen zur Bildung der erfindungsgemäßen Vorrichtung zu Stabilisierung von Pflanzen mit schweren Fruchtständen;

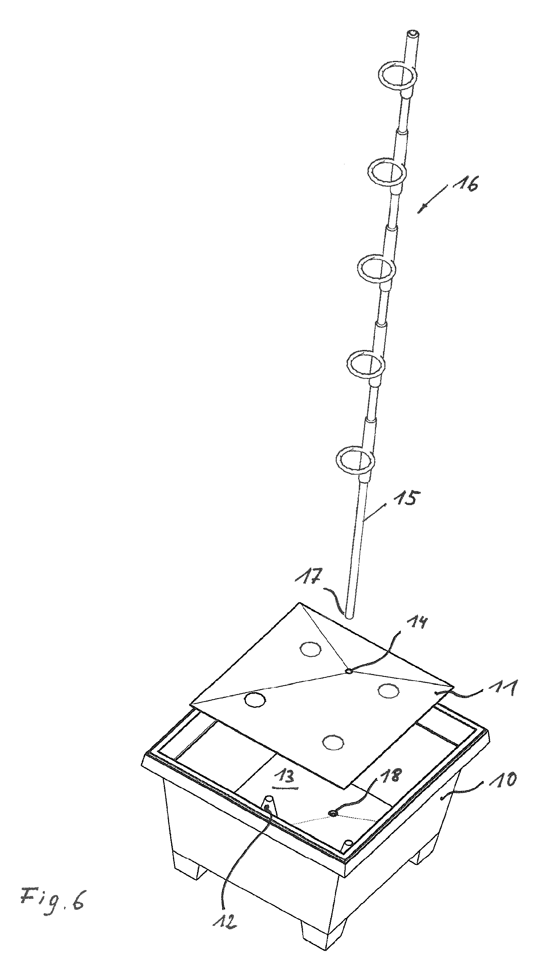

- Fig. 6: eine Explosivdarstellung eines Pflanzgefäßes mit Zwischenboden und Mitteln zum vertikalen Fixieren und Halten eines Pflanzstabes sowie
- Fig. 7: eine teilweggebrochene Darstellung und Teilschnittdarstellung des Pflanzgefäßes mit Pflanzstab.

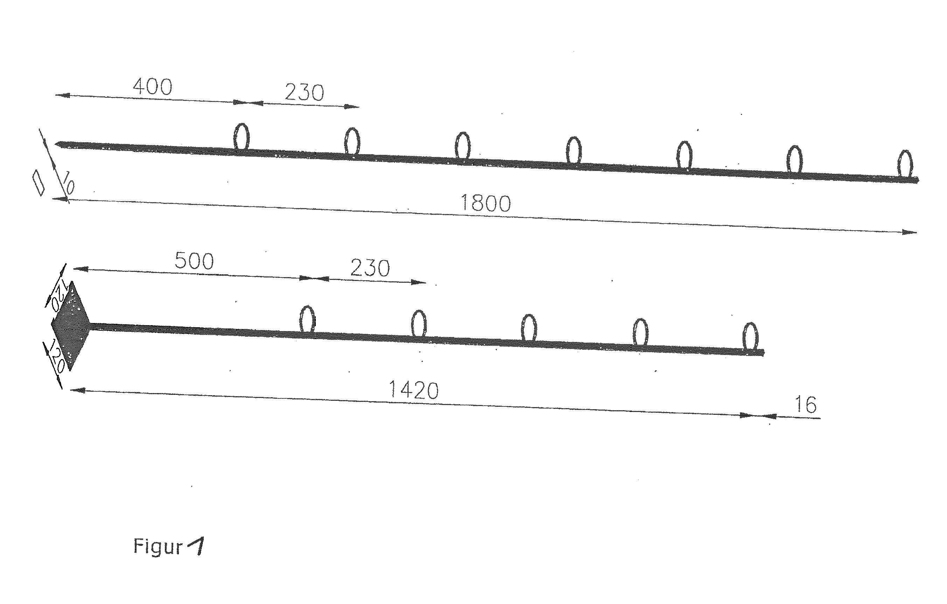

Die Fig. 1 zeigt hierbei zwei prinzipielle Varianten der Pflanzenhalterun, einmal ausgebildet als Rammspitze für Freiland- oder Gewächshausnutzung sowie zum anderen ausgebildet mit einer Bodenplatte, insbesondere für die Nutzung in Pflanzgefäßen für Terrassen oder Balkone.

Gemäß der figürlichen Darstellung und der Ausbildung der Pflanzenhalterung mit Rammspitze (linksseitig) wird von einer Gesamtstab- oder -stangenlänge von ca. 1800 mm ausgegangen.

Ausgehend von der im unteren Bereich befindlichen Rammspitze ist ein erster Haltering etwa in einem Abstand von 400 mm durch Verschweißen an der Stange fixiert. Die weiteren Halteringe, insgesamt sieben an der Zahl, besitzen einen Abstand von untereinander ca. 230 mm. Der Durchmesser der Ringe liegt bevorzugt bei etwa 50 mm.

Die Rammspitze in der Figur, rechter Bildteil, weist eine Bodenplatte auf mit einer Fläche von ca. 120 mm x 120 mm. Der erste, untere Haltering ist 500 mm von der Bodenplatte beanstandet am Stab fixiert. Die weiteren Ringe, insgesamt fünf an der Zahl, weisen dann einen Abstand von untereinander ca. 230 mm auf.

Obwohl in der Figur nicht dargestellt, können der Stab oder die Stange geteilt ausgeführt werden, was einen leichteren Versand der Pflanzenhalterung ermöglicht. Auch kann grundsätzlich eine teleskopierbare Anordnung gewählt werden.

Für Paprika genügt eine Ausführung der Pflanzenhalterung mit ca. drei Halteringen und entsprechend reduzierter Höhe.

Der bevorzugte Ringdurchmesser im Bereich zwischen 50 mm bis maximal 100 mm sichert den Pflanzstamm in ausgezeichneter Weise, auch bei möglichen Windlasten und sehr schweren Fruchtständen.

Die in den Figuren teilweise angegebenen Bemaßungen sind vorteilhaft und beispielgemäß, ohne dass diesbezüglich eine Einschränkung der erfindungsgemäßen Lehre gegeben ist.

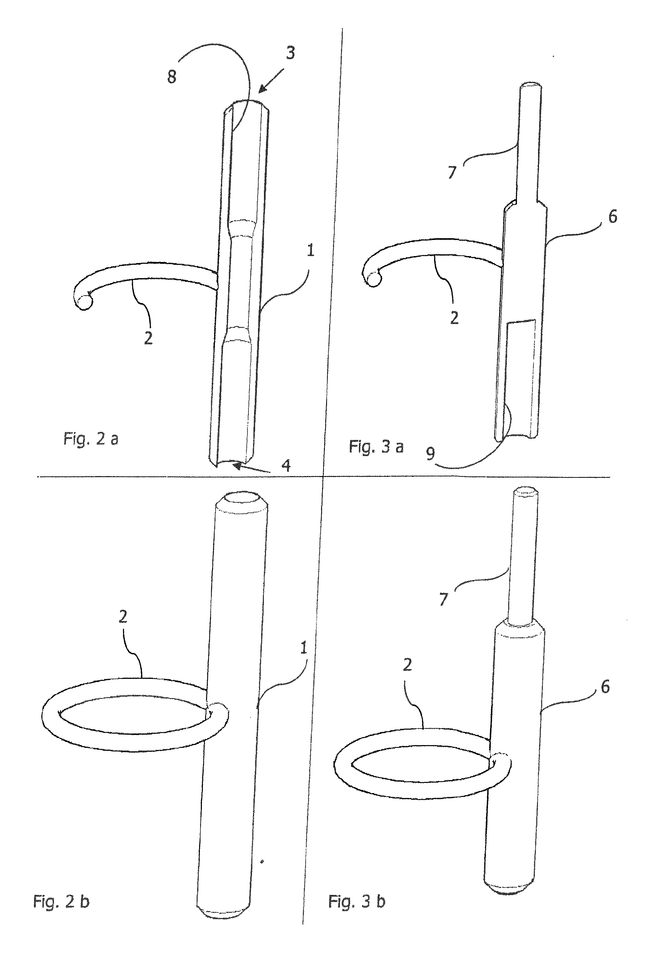

Die Fig. 2a, 2b, 3a und 3b zeigen eine Weiterbildung von Halteringen, die einstückig bezüglich eines Stangen- oder Stababschnitts ausgeführt sind.

Eine solche einstückige Anordnung kann z.B. durch Kunststoff-Spritzpressen oder Kunststoff-Gießen oder dergleichen Verfahren vorgenommen werden.

Die Fig. 2a zeigt einen Längsschnitt durch einen solchen Stangen- oder Stababschnitt 1 mit angeformtem Haltering 2.

Sowohl das obere Ende 3 als auch das untere Ende 4 des Stababschnitts 1 weist einen Hohlraum auf, der einen definierten Innendurchmesser besitzt.

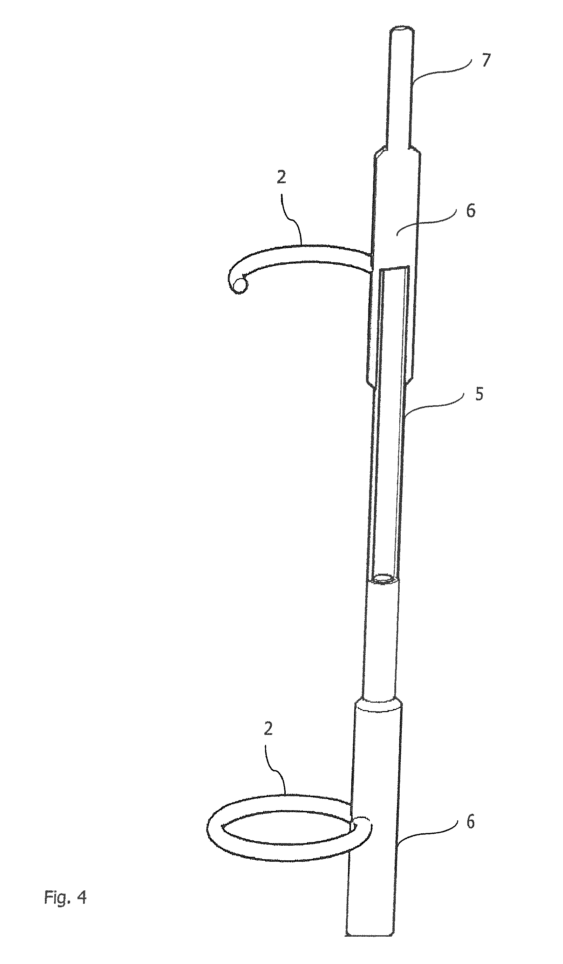

Dieser Hohlraum dient der Aufnahme eines Endes eines Verbindungsrohrelements 5 (siehe Fig. 4) oder eines im Durchmesser abgesetzten Endes 5 einer Ausführungsform eines Stangen- oder Stababschnitts 6 gemäß den Fig. 3a oder 3b.

Unter Rückgriff auf die Fig. 2a bis 3b ist ersichtlich, dass die Ausführungsformen der mit Haltering versehenen Stangen- oder Stababschnitte 6 mit denjenigen nach den Fig. 2a oder 2b durch Zusammenstecken im Sinne der zu schaffenden Vorrichtung verlängerbar sind. Alternativ besteht die Möglichkeit, die Verbindungsrohrelemente 5 auf die durchmesserreduzierten Abschnitte 7 der Ausführungsform nach Fig. 3b aufzusetzen, wobei, wie bereits erwähnt, das in der Fig. 4 gezeigte obere Ende des Verbindungsrohrelements 5 in den Hohlraum eintaucht, der in der Fig. 2a mit dem Bezugszeichen 8 oder in der Fig. 3a mit dem Bezugszeichen 9 gekennzeichnet ist.

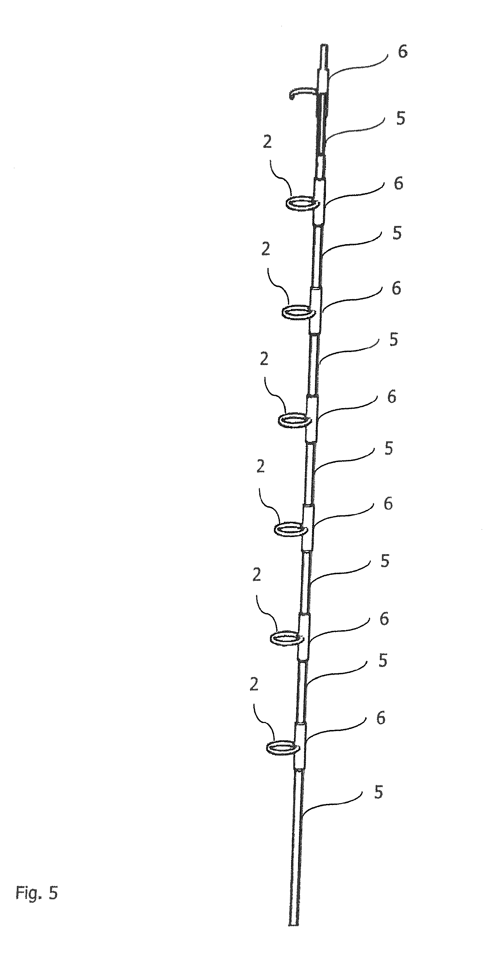

Wie die Fig. 5 deutlich werden lässt, kann nun eine Aneinanderreihung von Rohrelementen 5 mit den einstückigen Halteringen mit Stangen- oder Stababschnitt 1 bis 6 vorgenommen werden.

Am unteren Ende der Rohrelemente in Fig. 5 kann entweder eine Bodenplatte befindlich sein oder es besteht die Möglichkeit, eine Eintreibspitze ähnlich der Fig. 1, linke Abbildung auszubilden.

Bei der erfindungsgemäßen Vorrichtung zur Stabilisierung von Pflanzen in Verbindung mit dem Einsatz bei einem Pflanzgefäß wird dieses so weitergebildet, dass das Pflanzgefäß 10 einen Zwischenboden 11 in seinem Inneren aufnimmt. Über Auflagen bildende Fortsätze 12 wird der Zwischenboden 11 beabstandet vom eigentlichen Boden 13 des Pflanzgefäßes 10 gehalten. Erfindungsgemäß weist der Zwischenboden 11 eine Durchgangsöffnung 14 auf, die im Wesentlichen dem unteren Durchmesser 15 des Pflanzstabes 16 entspricht.

Das Stabende 17 wiederum wird von einer Ausnehmung 18 im Boden 13 des Pflanzgefäßes 10 formschlüssig gehalten.

Durch den höhenmäßigen Abstand der Ausnehmung 18 und der Durchgangsöffnung 14 ergibt sich eine exakte und sichere vertikale Führung des Pflanzstabes 16.

Diesbezüglich liegen die Durchgangsöffnung 14 und die Ausnehmung 18 konzentrisch zueinander.

Wie aus der figürlichen Abbildung nachvollziehbar, befindet sich die Ausnehmung 18 sowie die Durchgangsöffnung 14 außerhalb des Schwerpunkts des Pflanzgefäßes und ist bei nicht quadratischen oder rechteckigen Pflanzgefäßen bevorzugt exzentrisch befindlich.

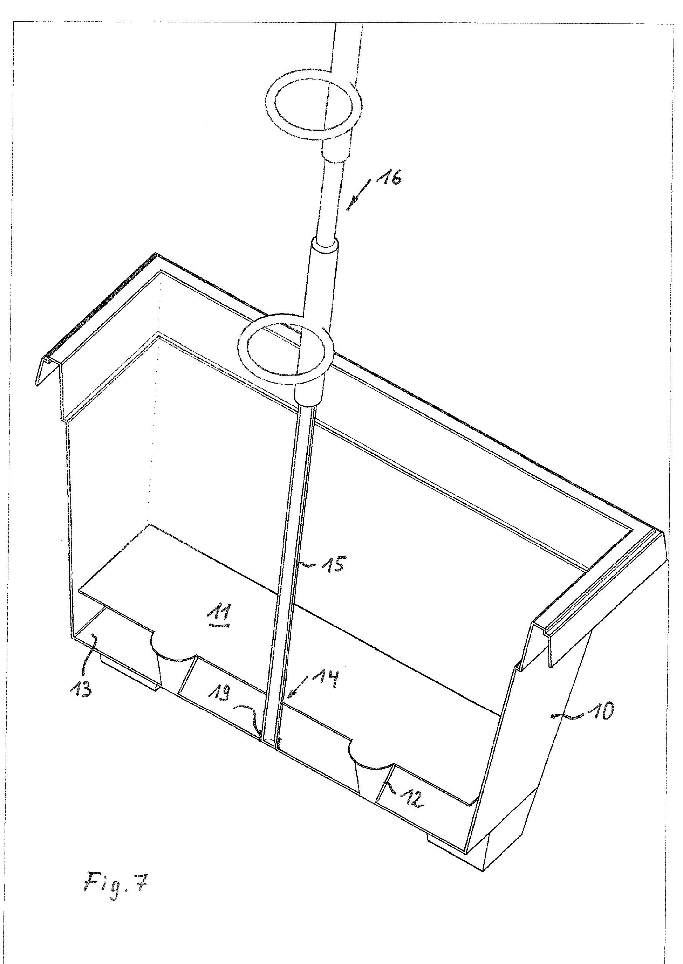

Die Ausnehmung 18 kann, wie in der Fig. 7 angedeutet, einen Hülsenabschnitt 19 umfassen, dessen Innendurchmesser dem Außendurchmesser des Stabendes 17 entspricht.

## Patentansprüche

1. Vorrichtung zur Stabilisierung von Pflanzen mit insbesondere schweren Fruchtständen wie Tomaten, Gurken, Paprika oder dergleichen, umfassend eine eigenstabile Stange oder Stab sowie hieran befestigte, untereinander beabstandete Halteringe, wobei der Durchmesser der Halteringe im Bereich zwischen 40 mm bis 100 mm liegt, wobei der Abstand der Halteringe zwischen 200 mm und 300 mm beträgt und weiterhin die Halteringe stoffschlüssig, insbesondere durch Verschweißen an der Stange oder dem Stab fixiert oder die Halteringe mit der Stange oder dem Stab oder einem Stangen- oder Stababschnitt einstückig ausgeführt sind,
**dadurch gekennzeichnet, dass**
zum Aufnehmen der Stange (16) in einem an sich bekannten Pflanzgefäß (10) mit einem Zwischenboden (11) der Zwischenboden (11) eine Durchgangsöffnung (14) zum Hindurchführen eines Endes (15; 17) des Stabes (16) aufweist, wobei das Stabende (17) in einer Ausnehmung (18) im oder am Boden (13) des Pflanzgefäßes (10) formschlüssig gehalten ist.

2. Vorrichtung nach Anspruch 1,
**dadurch gekennzeichnet, dass**
die Durchgangsöffnung (14) und die Ausnehmung (18) konzentrisch zueinander orientiert sind.

3. Vorrichtung nach Anspruch 1 oder 2,
**dadurch gekennzeichnet, dass**
die Durchgangsöffnung (14) und die Ausnehmung (18) außermittig oder außerhalb des Schwerpunkts des Pflanzgefäßes (10) befindlich sind.

4. Vorrichtung nach einem der vorangegangenen Ansprüche,
**dadurch gekennzeichnet, dass**
die Ausnehmung (18) einen Hülsenabschnitt (19) umfasst, dessen Innendurchmesser dem Außendurchmesser des Stabendes (17) entspricht.

5. Vorrichtung nach einem der vorangegangenen Ansprüche,
**dadurch gekennzeichnet, dass**
der Zwischenboden (11) in das Pflanzgefäß (10) einlegbar und formschlüssig gehalten ist.

6. Vorrichtung nach einem der vorangegangenen Ansprüche,
**dadurch gekennzeichnet, dass**
der Stab oder die Stange (16) geteilt ausgebildet ist.

7. Vorrichtung nach einem der vorangegangenen Ansprüche,
**dadurch gekennzeichnet, dass**
die Anordnung der Halteringe (2) konzentrisch ausgeführt ist.

8. Vorrichtung nach einem der vorangegangenen Ansprüche,
**dadurch gekennzeichnet, dass**
die Anzahl der Halteringe (2) in Abhängigkeit von der Stab-oder Stangenlänge zwischen drei und zehn, bevorzugt drei und sieben beträgt.
